# EUROPÄISCHE PATENTANMELDUNG

(11) **EP 0 835 791 A2**
(43) Veröffentlichungstag der Anmeldung: **15.04.1998**
(21) Anmeldenummer: 97114896.0
(22) Anmeldetag: 28.08.1997
(51) Int. Cl.: B60S 1/04, B60S 1/16

(54) **Scheibenwischeranlage**

(30) Priorität: 11.10.1996 DE 19641951
(71) Anmelder: ROBERT BOSCH GMBH, 70442 Stuttgart (DE)
(72) Erfinder: Klug, Hans-Georg, Dr., 76530 Baden-Baden (DE); Kuehbauch, Gerd, 77830 Buehlertal (DE); Dietrich, Jan, Dr., 77815 Buehl (DE)

(57) **Zusammenfassung**

Die Erfindung betrifft eine Scheibenwischeranlage (2) für Kraftfahrzeuge, mit einem ortsfest angeordneten Halteelement (4), das an seinen freien Enden wenigstens ein Lager (14) zur Aufnahme einer Wischerwelle (16) aufweist, einem das Halteelement (4) mit einem Motorgetriebegehäuse verbindenden Motorhalter (12) und einem mit dem Motorgetriebegehäuse (6) verbundenen Motor (10), wobei das Motorgetriebegehäuse (6) einstückig mit dem Motorhalter (12) aufgeführt ist.

## Beschreibung

Die Erfindung betrifft eine Scheibenwischeranlage für Kraftfahrzeuge mit den im Oberbegriff des Hauptanspruchs genannten Merkmalen.

### Stand der Technik

Scheibenwischeranlagen der angesprochenen Art sind bekannt. Diese weisen ein in der Regel als Hohlstange ausgebildetes Halteelement auf, an deren freien Enden Lager zur Aufnahme jeweils einer Wischerwelle angeordnet sind. Dem Mittelteil des Halteelements ist ein einstückig mit dem Halteelement ausgeführter Motorhalter zugeordnet, an dem mittels geeigneter Befestigungsmittel, beispielsweise Schrauben, der Wischermotor und das Wischermotorgetriebegehäuse angebracht wird. Der Motor und das Motorgetriebegehäuse stellen demgemäß ein eigenständiges Erzeugnis eines getrennten Produktionsprozesses dar und werden erst bei der Montage der Scheibenwischeranlage mit dem den Motorhalter aufweisenden Halteelement zusammengebaut. Diese getrennte Fertigungsweise ist vergleichsweise arbeits- und kostenintensiv, da der Zusammenbau einen eigenen Arbeitsgang darstellt. Zudem erhöhen die für die Befestigung des Motorgetriebegehäuses an dem Motorhalter erforderlichen Befestigungsmittel das Gewicht der Scheibenwischeranlage.

### Vorteile der Erfindung

Die Erfindung betrifft eine Scheibenwischeranlage mit einem ortsfest angeordneten Halteelement, das an einem oder beiden seiner freien Enden einseitig jeweils ein Lager zur Aufnahme einer Wischerwelle aufweist, einem das Halteelement mit einem Motorgetriebegehäuse verbindenden Motorhalter und einem mit dem Motorgetriebegehäuse verbundenen Wischermotor, wobei das Motorgetriebegehäuse so ausgeführt ist, daß es gleichzeitig als Motorhalter wirkt, das heißt einstückig mit diesem ausgeführt ist und den Wischermotor am Halteelement befestigt.

Die Erfindung sieht also vor, das Motorgetriebegehäuse in den Motorhalter des Halteelementes zu integrieren. Das mit dem Motor verbundene Motorgetriebegehäuse wird gemäß der Erfindung also nicht, wie im Stand der Technik, mit Befestigungsmitteln an einem Motorhalter in zusätzlichen Arbeitsschritten befestigt, was den Kosten- und Arbeitsaufwand erheblich reduziert. Vielmehr wird der Motor einfach beispielsweise mittels einer Flanschverbindung mit dem den Motorhalter integrierenden Motorgetriebegehäuse verbunden. Es sind also keine zusätzlichen Befestigungsmittel für die Verbindung zwischen Motorgetriebegehäuse und Motorhalter notwendig, so daß sich eine Gewichtsersparnis ergibt. Die Erfindung sieht also in vorteilhafter Weise vor, das Motorgetriebegehäuse so auszuführen, daß es unmittelbar ohne Ausführung eines getrennten Motorhalters an dem Halteelement angebracht oder mit diesem zusammen hergestellt werden kann.

Im Zusammenhang mit der vorliegenden Erfindung wird unter einem Halteelement ein vorzugsweise rohrförmiges Element verstanden, das an wenigstens einem seiner freien Enden jeweils ein Lager zur Aufnahme der Wischerwelle aufweist. Das Halteelement kann vorzugsweise ferner an seinen freien Enden jeweils Befestigungselemente aufweisen, die für die Aufnahme eines Befestigungsmittels geeignet sind, um so das Halteelement an einem Karosserieteil des Kraftfahrzeuges zu fixieren. Im Zusammenhang mit der vorliegenden Erfindung wird unter einem Motorhalter ein der Befestigung des Motors und des Motorgetriebegehäuses am Halteelement dienendes Element verstanden.

Die Erfindung sieht in vorteilhafter Weise vor, das einstückig mit dem Motorhalter ausgeführte Motorgetriebegehäuse, also das erfindungsgemäß zur unmittelbaren Anordnung an das Halteelement ausgeführte Motorgetriebegehäuse als Formteil, insbesondere als Formteil aus Kunststoff auszuführen. Selbstverständlich kann das erfindungsgemäß ausgebildete Motorgetriebegehäuse auch aus Metall, wie Aluminium, Zink oder Magnesium hergestellt werden. In besonders vorteilhafter Weise wird das erfindungsgemäß ausgebildete Motorgetriebegehäuse mittels Spritzgußtechnik mit dem Halteelement verbunden, so daß sich eine spielfreie und besonders stabile Verbindung zwischen Halteelement und erfindungsgemäß ausgebildeten Motorgetriebegehäuse ergibt. Selbstverständlich kann das erfindungsgemäß vorgesehene Motorgetriebegehäuse auch Befestigungselemente zur Aufnahme von Befestigungsmitteln zur Fixierung der Scheibenwischeranlage an der Karosserie des Kraftfahrzeuges aufweisen.

Die Erfindung sieht vorteilhafter Weise vor, das vorzugsweise rohrförmige Halteelemente aus Metall, insbesondere Stahl oder Aluminium sowie die endständig an dem Halteelemente angeordneten Lager aus Kunststoff, Aluminium oder Zn auszuführen.

Wie erwähnt, sieht die Erfindung vor, das Motorgetriebegehäuse so auszuführen, daß es unmittelbar ohne die Notwendigkeit eines an dem Halteelement ausgeführten Motorhalters mit dem Halteelement verbunden werden kann. Die Erfindung sieht jedoch in vorteilhafter Weise auch vor, das Halteelement, das Motorgetriebegehäuse und das oder die Lager aus einem Guß, das heißt einstückig beispielsweise mittels Spritzgußtechnik aus Kunststoff oder vorzugsweise aus Aluminium herzustellen.

Die Erfindung sieht auch vor, das mindestens eine, an einem freien Ende des Halteelements angeordnete Lager, entweder in herkömmlicher Weise durch Einführen eines Stutzens in das Halteelement und Herstellen eines Formschlusses durch sogenanntes "Crimpen" (Quetschen) anzuordnen oder, besonders vorteilhaft, die Lager auf die vorzugweise geschlossenen Enden des Halteelementes mit Spritzgußtechnik aufzubringen. Die letztere Ausführungsform ermöglicht eine besonders spielfreie und stabile Verbindung zwischen Lager und Halteelement.

Weitere vorteilhafte Ausgestaltungen der Erfindung sind den Unteransprüchen zu entnehmen.

### Zeichnung

Die vorliegende Erfindung wird anhand von Ausführungsbeispielen mit Bezug auf die Zeichnung näher erläutert. Dabei zeigen:
- Figur 1: eine erfindungsgemäße Scheibenwischeranlage in Draufsicht;
- Figur 2: eine weitere Ausführungsform der erfindungsgemäßen Scheibenwischeranlage in Draufsicht und
- Figur 3: die erfindungsgemäße Scheibenwischeranlage gemäß Figur 2 mit Darstellung des angeflanschten Motors und des Kupplungsgestänges.

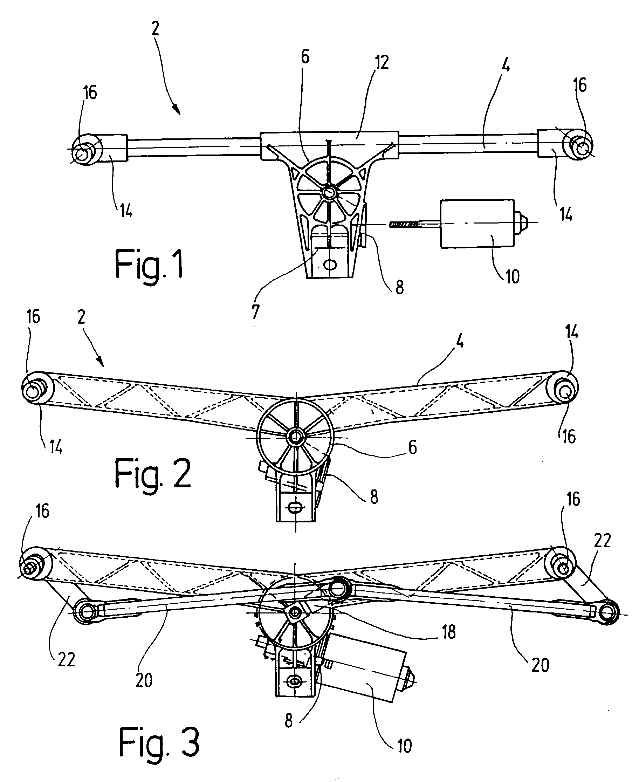

Die Figur 1 stellt die erfindungsgemäße Scheibenwischeranlage 2 dar, die ein an dem rohrförmigen Halteelement 4 angeordnetes Motorgetriebegehäuse 6 umfaßt. Das Motorgetriebegehäuse 6 umfaßt das Getriebe 7 und eine Aufnahme 8 für den im wesentlichen ein Polgehäuse, einen Anker und einen Bürstenhalter umfassenden Motor 10. Das Motorgetriebegehäuse 6 weist neben seiner Funktion als Motorhalter und Getriebegehäuse die Funktion auf, das Halteelement 4 mit dem Motor 10 zu verbinden. Das Motorgetriebegehäuse 6 umfaßt daher einen rohrförmigen Fortsatz 12, der unter Verwendung von Spritzgußtechnik angeordnet wurde und zur Aufnahme des Halteelementes 4 dient. Zur Komplettierung der Scheibenwischeranlage ist es nun nicht mehr notwendig, den Motor mittels gesonderter Befestigungsvorrichtungen auf dem Motorhalter eines Halteelementes anzuordnen. Vielmehr wird es durch die Erfindung ermöglicht, den Motor 10 durch eine einfache Flanschverbindung mit dem Motorgetriebegehäuse 6 zu verbinden. Das Motorgetriebegehäuse 6 ist als Formteil aus Kunststoff gefertigt, beispielsweise PBT-GF, während das Halteelement ein Metallrohr beispielsweise aus Stahl oder Aluminium ist.

Das Halteelement 4 ist ortsfest in einem Kraftfahrzeug angeordnet. Dazu weist das Halteelement 4 an seinen freien Enden jeweils ein hier nicht dargestelltes Befestigungselement auf, das eine Aufnahme für ein hier ebenfalls nicht dargestelltes Befestigungsmittel umfaßt. Mittels des Befestigungsmittels erfolgt eine Befestigung an einem Karosserieteil des Kraftfahrzeuges. Das Halteelement 4 umfaßt ferner an seinen beiden freien Enden jeweils ein Lager 14, das als Formrohr aus Kunststoff, beispielsweise POM, GD-AL oder GD-Zn, ausgeführt und spielfrei mittels Spritzgußtechnik an dem Halteelement 4 angebracht ist. Durch das Lager 14 wird eine Wischerwelle 16 geführt, die drehbeweglich, jedoch axial festgelegt ist. Die Wischerwelle 16 ragt beidseitig über das Lager 14 hinaus, wobei an dem einen Ende der Wischerwelle 16 ein hier nicht dargestelltes Kupplungsgestänge angreift. Das zweite Ende der Wischerwelle 16 trägt einen ein Wischerblatt aufweisenden Wischerarm (nicht dargestellt).

Die Funktion stellt sich wie folgt dar.

Über den an das Motorgetriebegehäuse 6 angeflanschten Motor 10 und das im Motorgetriebegehäuse 6 befindliche Getriebe 7 wird eine Kurbel 18 (Figur 3) in Rotation versetzt. Hierdurch erfahren die Kupplungsstangen 20 (Figur 3) eine im wesentlichen entlang ihrer Längsachse erfolgende, axiale Bewegung. Diese wird über die Kupplungsstangen 22 (Figur 3) in eine Schwenkbewegung umgewandelt und auf die Wischerwelle 16 übertragen. Der an der Wischerwelle 16 angeordnete nicht dargestellte Wischerarm führt dann die bekannte Schwenkbewegung aus.

Im folgenden werden für gleiche oder baugleiche Teile auch gleiche Bezugsziffern verwendet.

Die Figur 2 beschreibt eine weitere Ausführungsform der Erfindung. Gemäß dieser Ausführungsform ist die Scheibenwischeranlage 2, insoweit sie das Halteelement 4, das Motorgetriebegehäuse 6 und die Lager 14 umfaßt, aus einem Guß, beispielsweise in Spritzgußtechnik, hergestellt. Gemäß dieser Ausführungsform ist es nicht nötig, das erfindungsgemäße Motorgetriebegehäuse 6 beispielsweise mittels Spitzgußtechnik mit dem Halteelement 4 zu verbinden, da diese Elemente bereits einstückig ausgeführt sind. Auch diese Ausführungsform weist im Motorgetriebegehäuse 6 eine Aufnahme 8 für den hier nicht dargestellten Motor 10 auf. Die im wesentlichen einstückig ausgeführte Scheibenwischeranlage 2 gemäß Figur 2 kann beispielsweise aus Aluminium oder auch Kunststoff hergestellt sein.

Die Figur 3 verdeutlicht den komplettierten Aufbau der Scheibenwischeranlage 2 gemäß Figur 2. Der Motor 10 ist an die Aufnahme 8 des Motorgetriebegehäuse 6 angeflanscht. Dem Motorgetriebegehäuse 6 ist eine Kurbel 18 zugeordnet, die mit den Kupplungsstangen 20 verbunden ist. Drehbeweglich mit den Kupplungsstangen 20 sind Kupplungsstangen 22 verbunden, die wiederum drehfest mit der Wischerwelle 16 verbunden sind. Im Motorgetriebegehäuse 6 sind abgesehen von den vom Motor 10 umfaßten Polgehäuse, Anker und Bürstenhalter alle Elemente des Antriebsmotors enthalten.

## Patentansprüche

1. Scheibenwischeranlage für Kraftfahrzeuge, mit einem ortsfest angeordneten Halteelement, das an seinen freien Enden wenigstens ein Lager zur Aufnahme einer Wischerwelle aufweist, einem das Halteelement mit einem Motorgetriebegehäuse verbindenden Motorhalter und einem mit dem Motorgetriebegehäuse verbundenen Motor, **dadurch gekennzeichnet**, daß das Motorgetriebegehäuse (6) einstückig mit dem Motorhalter (12) ausgeführt ist.

2. Scheibenwischeranlage nach Anspruch 1, **dadurch gekennzeichnet**, daß das Motorgetriebegehäuse (6) als Formteil, insbesondere aus Kunststoff, ausgeführt ist.

3. Scheibenwischeranlage nach einem der vorhergehenden Ansprüche, **dadurch gekennzeichnet**, daß das Motorgetriebegehäuse (6) aus Aluminium, Zink oder Magnesium hergestellt ist.

4. Scheibenwischeranlage nach einem der vorhergehenden Ansprüche, **dadurch gekennzeichnet**, daß das Motorgetriebegehäuse (6) mit dem Halteelement (4) mittels Spritzgußtechnik verbunden ist.

5. Scheibenwischeranlage nach einem der vorhergehenden Ansprüche, **dadurch gekennzeichnet**, daß das Halteelement (4) rohrförmig ausgeführt ist.

6. Scheibenwischeranlage nach einem der vorhergehenden Ansprüche, **dadurch gekennzeichnet**, daß das Halteelement (4) aus Metall, insbesondere Stahl oder Aluminium hergestellt ist.

7. Scheibenwischeranlage nach einem der vorhergehenden Ansprüche, **dadurch gekennzeichnet**, daß das wenigstens eine Lager (14) aus Kunststoff hergestellt ist.

8. Scheibenwischeranlage nach einem der vorhergehenden Ansprüche, **dadurch gekennzeichnet**, daß das mindestens eine Lager (14) mittels Spritzgußtechnik mit dem Halteelement (4) verbunden ist.

9. Scheibenwischeranlage nach einem der vorhergehenden Ansprüche, **dadurch gekennzeichnet**, daß das wenigstens eine Lager (14), das Halteelement (4) und das mit dem Motorhalter (12) integrierte Motorgetriebegehäuse (6) einstückig ausgeführt ist.

10. Scheibenwischeranlage nach einem der vorhergehenden Ansprüche, **dadurch gekennzeichnet**, daß der Motor (10) mittels einer Flanschverbindung mit der Aufnahme (8) des Motorgetriebegehäuse (6) verbunden ist.
